# EUROPÄISCHE PATENTSCHRIFT

(11) **EP 1 008 630 B1**
(45) Veröffentlichungstag und Bekanntmachung des Hinweises auf die Patenterteilung: **15.06.2011**
(21) Anmeldenummer: 99124457.5
(22) Anmeldetag: 08.12.1999
(51) Int. Cl.: C08L 95/00

(54) **Verfahren zur Herstellung polymermodifizierter Asphalte**
Process for the preparation of polymer-modified asphalts
Préparation des asphaltes modifiés par un polymère

(30) Priorität: 09.12.1998 DE 19856740
(43) Veröffentlichungstag der Anmeldung: 14.06.2000
(73) Patentinhaber: Lucobit AG, 50389 Wesseling (DE)
(72) Erfinder: Blümel, Thomas, Dr., 63517 Rodenbach (DE); Riegler, Robert, 67459 Böhl-Iggelheim (DE)
(74) Vertreter: Bungartz, Klaus Peter

(56) Entgegenhaltungen:
- EP-A- 0 211 103
- EP-A- 0 685 529

## Beschreibung

Gegenstand der vorliegenden Erfindung ist ein Verfahren zur Herstellung von polymermodifiziertem Asphalt (PmA), umfassend die folgenden Verfahrensschritte:
a) Dezentrale Mischung von Bitumen mit einem oder mehreren Polymeren und gewünschtenfalls weiteren Zusatzstoffen bei einer Temperatur oberhalb der Erweichungstemperatur des Bitumens und der Polymeren in einer ersten Mischeinrichtung,
b) Mischen der nach a) erhaltenen Mischung mit mineralischen Zuschlagstoffen in einer Asphaltmischanlage.

Weiterhin betrifft die vorliegende Erfindung eine Vorrichtung zur Herstellung von polymermodifiziertem Asphalt.

Im Asphaltbau werden dem im Asphalt vorhandenen bituminösen Bindemittel in der Regel verschiedene Polymere zugesetzt. Diese Polymere dienen der Beeinflussung der mechanischen und thermischen Eigenschaften des Asphalts. Insbesondere wird durch polymermodifiziertes Bitumen die Erweichung des Asphalts bei höheren Temperaturen eingeschränkt oder verhindert sowie die Flexibilität in der Kälte entscheidend verbessert.

Aus der EP 0 685 529 A1 ist ein Verfahren zur Herstellung von bitumösen Asphaltbelägen bekannt, wobei eine Modifikation durch Beimischung von Polymeren verfolgt. Dieses bekannte Verfahren hat jedoch den Nachteil, dass ein fertiges Produkt erzeugt wird, dass als feste Menge bestellt und abgenommen werden muss.

Aus der EP 0 211 103 ist ein Verfahren bekannt, bei dem in einer gemeinsamen Mischkammer Polymere; Bitumen und mineralische Zuschlagstoffe gemischt werden. Dieses Verfahren weist den Nachteil auf, dass in der einen Mischkammer, die den fertigen Asphalt mit allen mineralischen Zuschlagsstoffen mischen können muss; relativ lange Mischzeiten auftreten und, da es bei Asphaltmischanlagen üblich ist, dass die Asphaltmischanlage in großer Höhe angeordnet wird, damit der fertig gemischte Asphalt unmittelbar aus der Mischanlage in einen Lastwagen abgelassen werden kann, das Polymer der hochgelegenen Mischkammer zugeführt werden muss.

Aufgabe der Erfindung ist es daher, ein Verfahren zur Herstellung homogenen polymermodifizierten Bitumens zu schaffen, bei dem der logistische Aufwand verringert wird und bei dem mit möglichst geringen Anlagenkosten genau die Menge polymermodifizierten Bitumens herstellbar ist, die tatsächlich benötigt wird.

Diese Aufgabe wird dadurch gelöst, dass das eingangs erwähnte Verfahren zur Herstellung von polymermodifiziertem Asphalt (PmA) nun dadurch gekennzeichnet ist, dass der Verfahrensschritt a) und der Verfahrensschritt b) in dem selben Anlagenkomplex erfolgt in dem auch der fertige Asphalt gemischt wird, wobei die nach a) erhaltene Mischung ohne Umfüllung In Transportbehälter über eine Rohrleitung der Asphaltmischanlage zugeführt wird

Der Verfahrensschritt a) erfolgt also in unmittelbarer Nachbarschaft zu dem Verfahrensschritt b). In unmittelbarer Nachbarschaft zur Asphaltmischanlage soll in diesem Zusammenhang bedeuten, dass kein längerer Transport von einer zentralen Anlage zur Herstellung von polymermodifizierten Bitumen zu einer Asphaltmischanlage erforderlich ist, sondern die Polymermodifizierung des Bitumens in dem selben Anlagenkomplex erfolgt in dem auch der fertige Asphalt gemischt wird.

Eine bevorzugte Ausführungsform des Verfahrens ist dadurch gekennzeichnet, dass die, nach a) erhaltene- Mischung ohne Umfällung in Transportbehälter über eine Rohrleitung der Asphaltmischantage zugeführt wird. Ein Transport des polymermodifizierten Bitumens, insbesondere über den Straßen- oder Schienenverkehr, entfällt daher nach diesem Verfahren.

Als Polymere zur Modifizierung des Bitumens gemäß Schritt a) kommen alle üblichen in der Asphaltherstellung eingesetzten Polymere in Betracht. Die Polymere können hierbei aus der Familie der thermoplastischen Elastomere wie Styrol-Butadien-Styrol (SBS oder SBR), ataktischem Polypropylen, Ethylen-Propylen-Dien-Kautschuk (EPDM), Chloroprenkautschuk oder aus der Familie der Thermoplasten wie Ethylencopolymerisat/Bitutmenmischungen (ECB), Ethylenbutylacrylat, Ethylenvinylacetat, Ethylenmethacrylat, Copolymerisaten verschiedener α-Olefine, modifizierter oder unmodifizierter Polyethylenwachse oder auch aus Recycling-Gummi stammen.

In dem Verfahrensschritt a) kann das Bitumen direkt mit einem oder mehreren Polymerem vermischt werden. Um das Mischverfahren zu erleichtern, kann es jedoch auch vorteilhaft sein, die Polymeren in konzentrierter Form in Bitumen vorzudispergieren und dann diese Polymerdispersion dem Bitumen zuzusetzen.

Die Temperatur des Mischverfahrens a) liegt oberhalb der Erweichungstemperatur des Bitumens und der Polymeren. In der Regel wird diese Mischung bei Temperaturen zwischen 150 und 230°C, insbesondere zwischen 170 und 210°C durchgeführt.

Der Verfahrensschritt a) kann in verschiedenen handelsüblichen Mischaggregaten vorgenommen werden. Charakteristisch für diese Mischaggregate ist die gegenüber den technisch bisher verwendeten Mischeinrichtungen geringere Größe und Mischleistung. Durch die dezentrale Zubereitung des polymermodifizierten Bitumens am Ort der Asphaltmischanlage können als Mischaggregate kleine und preiswerte Geräte mit vergleichsweise geringem Ausstoß eingesetzt werden.

Eine bevorzugte Ausführungsform des erfindungsgemäßen Verfahrens ist dadurch gekennzeichnet, dass der Verfahrensschritt a) in einem Schneckenextruder bei einer Extrusionsleistung von 2000 bis 20000 kg/Std. vorgenommen wird. Vorzugsweise beträgt die Extrusionsleistung dieses Extruders zwischen 5000 und 15000 kg/Std.

Zur Sicherung der Qualitätserfordernisse ist es vorteilhaft, dass der Extruder mit einer Einrichtung versehen ist, welche die exakten Einstellungen der Mengen oder das Mengenverhältnis von Gemischen aus Bitumen und Polymeren protokolliert. Solche Meßund Protokolliereinrichtungen sind handelsüblich und dem Fachmann bekannt. In der Regel sind diese Einrichtungen an die volumetrische Dosierung gekoppelt. Eine zusätzliche Probenentnahmestelle am Ausgang des Extruders für eine zusätzliche Eignungsprüfung des polymermodifizierten Bitumens ist ebenfalls von Vorteil.

Eine weitere Ausführungsform des erfindungsgemäßen Verfahrens ist dadurch gekennzeichnet, dass der Verfahrensschritt a) in einer Mischeinrichtung mit einem Volumen von 50 bis 25000 1 in einem Zeittakt durchgeführt wird, der in einer Mischleistung von 2000 bis 20000 kg/h resultiert. Die Mischung kann dabei durch mechanische Rührer oder auch durch Umpumpen des schmelzflüssigen Gemisches erfolgen, wobei im letzteren Fall eine gute Durchmischung besonders dann erreicht wird, wenn das Gemisch durch den Umpumpvorgang eine Scherbeanspruchung von größer als 10 sec⁻¹ erfährt. Als besonders vorteilhaft haben sich Mischeinrichtungen mit einem Volumen von 100 bis 500, besonders 100 bis 200 1 erwiesen. Mischwerke dieses Volumens können in einem Taktverfahren betrieben werden, bei welchem innerhalb von etwa 20 bis 40 sec die Befüllung mit Bitumen und dem Polymer erfolgt, wobei schon während der Befüllung intensiv gerührt wird. Die Entleerung des Rührwerks kann bereits nach 40 bis 60 sec abgeschlossen sein, so dass mit einem neuen Takt begonnen werden kann. Auf diese Weise ist es möglich, semikontinuierlich homogene Mischungen von Polymeren und Bitumen bei einem Ausstoß von 2000 bis 20000 kg/Std. herzustellen. Auch bei dieser Ausführungsform des Verfahrens ist es vorteilhaft, dass die Mischeinrichtung mit einer Einrichtung versehen ist, welche die Mengen oder das Mengenverhältnis von vermischtem Bitumen und Polymeren protokolliert.

Das erfindungsgemäße Verfahren ist für die Herstellung polymermodifizierter Asphalte mit sehr unterschiedlichen Polymeren geeignet. Besonders vorteilhafte PmAs lassen sich erfindungsgemäß erhalten, wenn als Polymer im Verfahrensschritt a) ein Ethylencopolymer mit einem Ethylenanteil von 80 bis 90 Gew.-% eingemischt wird. Insbesondere sind Copolymere von Ethylen mit Buten, Isobuten, Hexen, Butylacrylat oder Vinylacetat zu nennen. Neben der großen technischen und wirtschaftlichen Flexibilität bei der Herstellung von polymermodifizierten Bitumen und hieraus hergestellter PmAs liegt ein weiterer Vorteil des erfindungsgemäßen Verfahrens darin, dass durch die kurze Abfolge der Verfahrensschritte a) und b) eine Entmischung des polymerrmodifizierten Bitumens verhindert wird und so die Qualität des PmAs in hohem Ausmaß sicher gestellt werden kann. Eine bevorzugte Ausführungsform des Verfahrens ist deshalb dadurch gekennzeichnet, dass der Verfahrensschritt b) in einem Zeitraum von höchstens 2 Std. nach der Durchführung des Verfahrensschritts a) erfolgt. Bevorzugt findet der Verfahrensschritt b) in einem Zeitraum von höchstens einer Stunde, besonders bevorzugt in einem Zeitraum von wenigen Minuten nach Durchführung des Verfahrensschritts a) statt.

Das erfindungsgemäße Verfahren setzt eine unmittelbare Nachbarschaft der Einrichtungen zur Durchführung der Verfahrensschritte a) und b) voraus. Gegenstand der vorliegenden Erfindung ist daher auch eine Vorrichtung zur Herstellung von polymermodifiziertem Asphalt (PmA) umfassend eine erste Mischeinrichtung zur Mischung von Bitumen mit Polymeren im geschmolzenem Zustand und eine zweite Mischeinrichtung zur Mischung dieser Bitumen- und Polymer enthaltenden Mischung mit mineralischen Zuschlagstoffen.

### Beispiele

### Beispiel 1

In einem Zweischneckenextruder (Typ ZSK 40 der Firma Krupp-Werner & Pfleiderer) wurden bei einer Zuflussrate von 15000 kg/Std. Bitumen B80 und 700 kg/Std. Lucobit^{®}-Granutat (Hersteller Elenac GmbH) bei einer Temperatur von 190°C extrudiert. Die Zuflussströme waren mit Messeinrichtungen zur Messung der Zuflußmenge versehen. Über eine Rohrleitung wurde das coextrudierte polymermodifizierte Bitumen in ein Asphaltmischwerk überführt und dort mit mineralischen Zuschlagstoffen (Verhältnis Bitumen : Mineralstoffen 1 : 950) vermischt. Die Länge der Rohrleitung betrug 20 m.

### Beispiel 2

Analog zu Beispiel 1 wurde mit den gleichen Bitumen- und Polymermengen sowie mineralischen Zuschlagstoffen polymermodifizierter Asphalt hergestellt. Dabei wurde lediglich der Extruder durch ein Mlschrührwerk mit mechanischem Rührer ersetzt. Dieses Mischrührwerk hatte ein Volumen von 150 1 und wurde semikontinuierlich in einem 45 sec-Takt betrieben, wobei die Befüllzeit 30 sec und die Entleerungszeit 15 sec betrug. Während des gesamten Mischtaktes wurde intensiv gerührt. Durch eine Probeentnahme am Ausgang des Mischrührwerks wurde festgestellt, dass das entstandene polymermodifizierte Bitumen frei von Inhomogenitäten war.

## Patentansprüche

1. Verfahren zur Herstellung von polymermodifiziertem Asphalt (PmA), umfassend die folgenden Verfahrensschritte:
a) Dezentrale Mischung von Bitumen mit einem oder mehreren Polymeren und gewünschtenfalls weiteren Zusatzstoffen bei einer Temperatur oberhalb der Erweichungstemperatur des Bitumens und der Polymeren in einer ersten Mischeinrichtung,
b) Mischen der nach a) erhaltenen Mischung mit mineralischen Zuschlagstoffen in einer Asphaltmischanlage,
**dadurch gekennzeichnet, dass** der Verfahrensschritt a) sowie der Verfahrensschritt b) in demselben Anlagenkomplex zur Herstellung des fertigen Asphaltes durchgeführt wird, wobei die nach a) erhaltene Mischung ohne Umfüllung in Transportbehälter über eine Rohrleitung der Asphaltmischanlage zugeführt wird.

2. Verfahren nach Anspruch 1, **dadurch gekennzeichnet, dass** der Verfahrensschritt a) in einem Schneckenextruder bei einer Extrusionsleistung von 2000 bis 20000 kg/Std. vorgenommen wird.

3. Verfahren nach Anspruch 2, **dadurch gekennzeichnet, dass** der Extruder mit einer Einrichtung versehen ist, welche die exakten Einstellungen der Mengen oder das Mengenverhältnis von Gemischen aus Bitumen und Polymeren protokolliert.

4. Verfahren nach Anspruch 1, **dadurch gekennzeichnet, dass** der Verfahrensschritt a) in einer ersten Mischeinrichtung mit einem Volumen von 50 bis 25000 I in einem Zeittakt durchgeführt wird, der in einer Mischleistung von 2000 bis 20000 kg/Std. resultiert.

5. Verfahren nach Anspruch 4, **dadurch gekennzeichnet, dass** die erste Mischeinrichtung mit einer Einrichtung versehen ist, welche die Mengen oder das Mengenverhältnis von vermischtem Bitumen und Polymeren protokolliert.

6. Verfahren nach einem der Ansprüche 1 bis 5, **dadurch gekennzeichnet, dass** als Polymer im Verfahrensschritt a) ein Ethylencopolymer mit einem Ethylenanteil von 80 - 90 Gew.-% eingemischt wird.

7. Verfahren nach einem der Ansprüche 1 bis 6, **dadurch gekennzeichnet, dass** der Verfahrensschritt b) in einem Zeitraum von höchstens 2 Stunden nach Durchführung des Verfahrensschritts a) erfolgt.

8. Vorrichtung zur Herstellung von polymermodifiziertem Asphalt (PmA), bestimmungsgemäß eingerichtet zur Durchführung eines Verfahrens nach einem der Ansprüche 1 bis 7, umfassend
- eine erste Mischeinrichtung zur dezentralen Herstellung eines polymermodifizierten Bitumens durch Mischung von Bitumen mit Polymeren im geschmolzenen Zustand und
- eine Asphaltmischanlage zur Mischung des polymermodifizierten Bitumens mit mineralischen Zuschlagstoffen,
**dadurch gekennzeichnet, dass**
die Vorrichtung derart eingerichtet ist, dass die Herstellung des polymermodifizierten Bitumens in der ersten Mischeinrichtung und die Mischung des polymermodifizierten Bitumens mit den mineralischen Zuschlagstoffenin der Asphaltmischanlage in demselben Anlagenkomplex durchführbar ist, wobei die erste Mischeinrichtung über eine Rohrleitung mit der Asphaltmischanlage verbunden ist, die dazu eingerichtet ist, dass das polymermodifizierte Bitumen ohne Umfüllung in Transportbehälter über die Rohrleitung der Asphaltmischanlage zuführbar ist.

## Claims

1. A method for the production of polymer-modified asphalt (PmM), comprising the following method steps:
a) decentralised mixing of bitumen with one or more polymers and, as required, further additives at a temperature above the softening temperature of bitumen and the polymers in a first mixing apparatus,
b) mixing of the mixture obtained according to a) with mineral aggregates in an asphalt mixing plant,
**characterised in that** method step a) and method step b) are carried out in the same plant complex for the production of the finished asphalt, wherein the mixture obtained according to a) is fed via a pipeline of the asphalt mixing plant without reloading into a transport container.

2. The method according to claim 1, **characterised in that** method step a) is carried out in a screw-type extruder with an extrusion capacity of 2000 to 20,000 kg/h.

3. The method according to claim 2, **characterised in that** the extruder is provided with a device which logs the exact settings of the quantities or quantitative ratio of mixtures of bitumen and polymers.

4. The method according to claim 1, **characterised in that** method step a) is carried out in a first mixing apparatus with a volume of 50 to 25,000 1 in a time cycle which results in a mixing capacity from 2000 to 20,000 kg/h.

5. The method according to claim 4, **characterised in that** the first mixing apparatus is provided with a device which logs the quantities or the quantitative ratio of mixed bitumen and polymers.

6. The method according to any one of claims 1 to 5, **characterised in that** an ethylene copolymer with an ethylene proportion of 80 - 90 wt.% is mixed in as a polymer in method step a).

7. The method according to any one of claims 1 to 6, **characterised in that** method step b) takes place in a period of at most 2 hours after performance of method step a).

8. A device for the production of polymer-modified asphalt (PmA), equipped as intended for the performance of a method according to any one of claims 1 to 7, comprising
- a first mixing apparatus for the decentralised production of a polymer-modified bitumen by mixing bitumen with polymers in the molten state and
- an asphalt mixing plant for mixing the polymer-modified bitumen with mineral aggregates,
**characterised in that**
the device is equipped in such a way that the production of the polymer-modified bitumen in the first mixing apparatus and the mixing of the polymer-modified bitumen with the mineral aggregates in the asphalt mixing plant can be carried out in the same plant complex, wherein the first mixing apparatus is connected by a pipeline to the asphalt mixing plant, which is equipped such that the polymer-modified bitumen can be fed via the pipeline of the asphalt mixing plant without reloading into a transport container.

## Revendications

1. Procédé de préparation d'asphalte modifié aux polymères (AMP), comprenant les étapes de procédé suivantes:
a) mélange décentralisé de bitume avec un ou plusieurs polymères et, le cas échéant, d'autres additifs à une température supérieure à la température de ramollissement dudit bitume et desdits polymères dans un premier dispositif de mélange,
b) ajout, dans une installation de mélange d'asphalte, de granulats minéraux au mélange obtenu à l'issue de l'étape a),
**caractérisé en ce que** l'étape de procédé a) ainsi que l'étape de procédé b) sont réalisées au sein d'un même ensemble d'installations destiné à la préparation de l'asphalte prêt à l'emploi, le mélange obtenu à l'issue de l'étape a) étant introduit à travers un conduit tubulaire dans ladite installation de mélange d'asphalte, sans être transvasé dans un récipient de transport.

2. Procédé selon la revendication 1, **caractérisé en ce que** l'étape de procédé a) est réalisée dans une extrudeuse à vis ayant un rendement d'extrusion compris entre 2000 et 20000 kg/h.

3. Procédé selon la revendication 2, **caractérisé en ce que** ladite extrudeuse est pourvue d'un dispositif d'enregistrement du paramétrage exact en ce concerne les quantités ou le rapport des quantités pour les mélanges de bitume et de polymères.

4. Procédé selon la revendication 1, **caractérisé en ce que** l'étape de procédé a) est réalisé dans un premier dispositif de mélange dont le volume est compris entre 50 et 25000 1, avec une cadence se traduisant par un rendement de mélange compris entre 2000 et 20000 kg/h.

5. Procédé selon la revendication 4, **caractérisé en ce que** ledit premier dispositif de mélange est pourvu d'un dispositif d'enregistrement des quantités ou du rapport des quantités du bitume et des polymères entrant dans le mélange.

6. Procédé selon l'une des revendications 1 à 5, **caractérisé en ce que** le polymère entrant dans le mélange à l'étape de procédé a) est un copolymère d'éthylène avec une proportion d'éthylène comprise entre 80 et 90 % en poids.

7. Procédé selon l'une des revendications 1 à 6, **caractérisé en ce que** l'étape de procédé b) est réalisée dans un laps de temps ne dépassant pas les 2 heures suivant la réalisation de l'étape de procédé a).

8. Dispositif de préparation d'asphalte modifié aux polymères (AMP), destiné à la mise en oeuvre d'un procédé selon l'une des revendications 1 à 7, comprenant
- un premier dispositif de mélange destiné à la préparation décentralisée d'un bitume modifié aux polymères en mélangeant du bitume avec des polymères en fusion et
- une installation de mélange d'asphalte destinée à mélanger ledit bitume modifié aux polymères avec des granulats minéraux
**caractérisé en ce que**
ledit dispositif est disposé de manière à ce que l'on puisse réaliser, dans un même ensemble d'installations, la préparation dudit bitume modifié aux polymères ayant lieu dans ledit premier dispositif de mélange, et le mélange dudit bitume modifié aux polymères avec lesdites granulats minéraux ayant lieu dans ladite installation de mélange d'asphalte, le premier dispositif de mélange étant relié à l'installation de mélange d'asphalte à travers un conduit tubulaire qui est disposé de façon à ce que le bitume modifié aux polymères puisse être introduit dans l'installation de mélange d'asphalte à travers ledit conduit tubulaire, sans être transvasé dans un récipient de transport.
